# EUROPEAN PATENT APPLICATION

(11) **EP 4 840 672 A1**
(43) Date of publication of application: **18.11.2026**
(21) Application number: 26179004.2
(22) Date of filing: 15.05.2026
(51) Int. Cl.: B60L 3/00, B60K 6/48, B60L 3/12, B60L 50/00, B60L 50/60, B60L 50/61, B60W 20/10, B60W 30/188, B60W 50/08

(54) **METHODS AND SYSTEMS FOR CONTROLLING THE TRACTION OF A TRACTOR**

(30) Priority: 15.05.2025 IN 202541047006
(71) Applicant: Mahindra & Mahindra Limited, Chengalpattu, Tamil Nadu 603004 (IN)
(72) Inventor: SARAVANAN, N, 603004 Chengalpattu (IN); SENTHIL, T, 603004 Chengalpattu (IN); POPLI, Viren, 603004 Chengalpattu (IN); RAY, Dipankar, 603004 Chengalpattu (IN); SUNDARAM, Pavithra, 603004 Chengalpattu (IN); HALDORAI, Ranjan, 603004 Chengalpattu (IN)
(74) Representative: Boult Wade Tennant LLP

(57) **Abstract**

Embodiments herein disclose methods and systems for automatically controlling the traction of a tractor, wherein the tractor can control the traction based on hysteresis and a moving average of the power being used by the tractor over a pre-defined period of time.

## Description

### TECHNICAL FIELD

Embodiments disclosed herein relate to tractors, and more particularly to operating a tractor, wherein the tractor is configured to operate with at least one battery.

### BACKGROUND

Currently, electric tractors are becoming popular, wherein the tractor can be a purely electric tractor, or a hybrid tractor. In the tractor segment, a traction motor provides power for enabling the movement of the tractor. Currently, the output of the traction motor is fixed. However, in certain scenarios, an operator of the tractor may not require all the power, and the operational needs may be met by using a fraction of the total power. This can further increase the fuel consumption of the tractor.

Hence, there is a need in the art for solutions which will overcome the above mentioned drawback(s), among others.

### OBJECTS

The principal object of embodiments herein is to disclose methods and systems for automatically controlling the traction of a tractor, wherein the tractor can control the traction based on hysteresis and a moving average of the power being used by the tractor over a pre-defined period of time.

These and other aspects of the embodiments herein will be better appreciated and understood when considered in conjunction with the following description and the accompanying drawings. It should be understood, however, that the following descriptions, while indicating at least one embodiment and numerous specific details thereof, are given by way of illustration and not of limitation. Many changes and modifications may be made within the scope of the embodiments herein without departing from the spirit thereof, and the embodiments herein include all such modifications.

### BRIEF DESCRIPTION OF FIGURES

Embodiments herein are illustrated in the accompanying drawings, throughout which like reference letters indicate corresponding parts in the various figures. The embodiments herein will be better understood from the following description with reference to the following illustratory drawings. Embodiments herein are illustrated by way of examples in the accompanying drawings, and in which:
FIG. 1 depicts a system for controlling the traction of a tractor, wherein the tractor can control the traction based on an average of the power being used by the tractor over a pre-defined period of time, according to embodiments as disclosed herein;
FIG. 2 is an example graph depicting example traction modes, according to embodiments as disclosed herein; and
FIG. 3A and FIG. 3B are flowcharts depicting the process of controlling the traction of a tractor, according to embodiments as disclosed herein.

### DETAILED DESCRIPTION

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

For the purposes of interpreting this specification, the definitions (as defined herein) will apply and whenever appropriate the terms used in singular will also include the plural and vice versa. It is to be understood that the terminology used herein is for the purposes of describing particular embodiments only and is not intended to be limiting. The terms "comprising", "having" and "including" are to be construed as open-ended terms unless otherwise noted.

The words/phrases "exemplary", "example", "illustration", "in an instance", "and the like", "and so on", "etc.", "etcetera", "e.g.," , "i.e.," are merely used herein to mean "serving as an example, instance, or illustration." Any embodiment or implementation of the present subject matter described herein using the words/phrases "exemplary", "example", "illustration", "in an instance", "and the like", "and so on", "etc.", "etcetera", "e.g.," , "i.e.," is not necessarily to be construed as preferred or advantageous over other embodiments.

Embodiments herein may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by a firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

It should be noted that elements in the drawings are illustrated for the purposes of this description and ease of understanding and may not have necessarily been drawn to scale. For example, the flowcharts/sequence diagrams illustrate the method in terms of the steps required for understanding of aspects of the embodiments as disclosed herein. Furthermore, in terms of the construction of the device, one or more components of the device may have been represented in the drawings by conventional symbols, and the drawings may show only those specific details that are pertinent to understanding the present embodiments so as not to obscure the drawings with details that will be readily apparent to those of ordinary skill in the art having the benefit of the description herein. Furthermore, in terms of the system, one or more components/modules which comprise the system may have been represented in the drawings by conventional symbols, and the drawings may show only those specific details that are pertinent to understanding the present embodiments so as not to obscure the drawings with details that will be readily apparent to those of ordinary skill in the art having the benefit of the description herein.

The accompanying drawings are used to help easily understand various technical features and it should be understood that the embodiments presented herein are not limited by the accompanying drawings. As such, the present disclosure should be construed to extend to any modifications, equivalents, and substitutes in addition to those which are particularly set out in the accompanying drawings and the corresponding description. Usage of words such as first, second, third etc., to describe components/elements/steps is for the purposes of this description and should not be construed as sequential ordering/placement/occurrence unless specified otherwise.

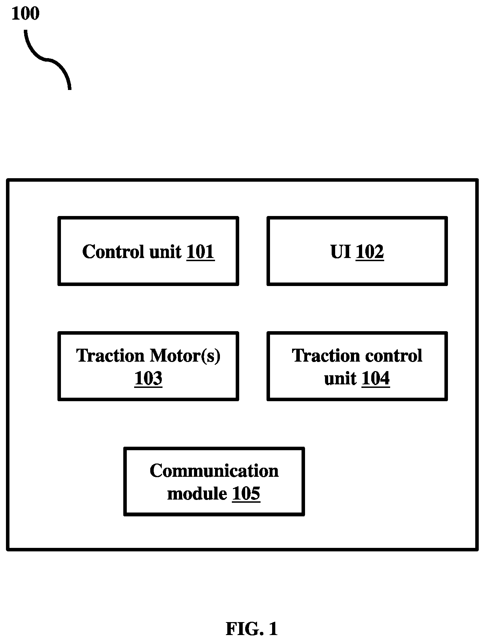

The embodiments herein achieve methods and systems for automatically controlling the traction of a tractor, wherein the tractor can control the traction based on hysteresis and a moving average of the power being used by the tractor over a pre-defined period of time. Referring now to the drawings, and more particularly to FIGS. 1 through 3B, where similar reference characters denote corresponding features consistently throughout the figures, there are shown embodiments.

The 'tractor', as referred to herein can be a tractor equipped with at least one battery, wherein the battery can power the movement of the tractor. In an embodiment herein, the tractor can be an electric tractor. In an embodiment herein, the tractor can be a hybrid tractor. Embodiments herein use the terms 'tractor', 'electric tractor', 'vehicle, 'electric vehicle', and so on interchangeably to refer to the tractor.

FIG. 1 depicts a system for controlling the traction of a tractor, wherein the tractor can control the traction based on hysteresis and a moving average of the power being used by the tractor over a pre-defined period of time. The system 100, as depicted, comprises a control unit 101, at least one user interface (UI) 102, at least one traction motor 103, a traction control unit 104, and at least one communication module 105.

The control unit 101 can be at least one of a single processor, a plurality of processors, multiple homogeneous or heterogeneous cores, multiple Central Processing Units (CPUs) of different kinds, microcontrollers, special media, and other accelerators. The control unit 101 may be an Application Processor (AP), a graphics-only processing unit such as a Graphics Processing Unit (GPU), a Visual Processing Unit (VPU), and/or an Artificial Intelligence (AI)-dedicated processor such as a Neural Processing Unit (NPU). In an embodiment herein, the control unit 101 can be a dedicated control unit. In an embodiment herein, the control unit 101 can be a control unit, which performs one or more actions/tasks in addition to embodiments as disclosed herein. In an example herein, the control unit 101 can be a Vehicle Control Unit (VCU). The control unit 101 can control vehicle operating modes based on user input. The control unit 101 can also provide input command for speed & torque request to the traction control unit 104. In an embodiment herein, the control unit 101, and the traction control unit 104 can be separate units. In an embodiment herein, the control unit 101, and the traction control unit 104 can be separate units, wherein the control unit 101 can provide instructions to the traction control unit 104, to drive the at least one traction motor 103.

The at least one UI 102 can enable a user to control/monitor/interact with the tractor. The UI 102 can comprise at least one display (which can be a display and/or a touchscreen display), at least one indicator/light, an instrument console, and so on.

In an embodiment herein, the at least one communication module 105 is configured to enable communication between the systems/devices/modules present in the vehicle. The at least one communication module 105 through which the systems/devices/modules present in the vehicle communicate may include wired and/or wireless communication medium compatible with one or more different communication protocols. The at least one communication module 105 can use one or more ports, such as, but not limited to, Serial digital interface (SDI), Controller Area Network (CAN), Local Interconnect Network (LIN), High-Definition Multimedia Interface (HDMI), Universal Serial Bus (USB), USB-C, and so on. The at least one communication module 105 may be configured for communication through a network. The network may comprise, but are not limited to, Global Positioning System (GPS), Global System for Mobile Communications (GSM), Local Area Network (LAN), Wireless Fidelity (Wi-Fi) compatibility, Bluetooth Low Energy (BLE), Near-field Communication (NFC), and so on. The wireless communication may further comprise one or more of Bluetooth, Zonal Intercommunication Global Standard (ZigBee), short-range wireless communication such as Ultra-wideband (UWB), medium-range wireless communication (such as, but not limited to, Wi-Fi, or long-range wireless communication such as Third Generation (3G), Fourth Generation (4G), Fifth Generation (5G), Sixth Generation (6G), or Worldwide Interoperability for Microwave Access (WiMAX)), according to the usage environment.

In an embodiment herein, the at least one traction motor 103 can power one or more wheels of the tractor. The output of the at least one traction motor 103 (in terms of horsepower) can be controlled by the control unit 101, wherein the control unit 101 communicates via the communication module 105 to a motor control unit (i.e., a motor inverter), which in turn controls the traction motor 103. The at least one motor 103 can have multiple horsepower levels, such as X1, X2, X3, X4, .......Xn, wherein X1 < X2 < X3 < X4 < .......< Xn. In an example herein, the at least one motor 103 can provide an output of 10 horsepower, 15 horsepower, 20 horsepower, 25 horsepower, 30 horsepower, 40 horsepower, and so on.

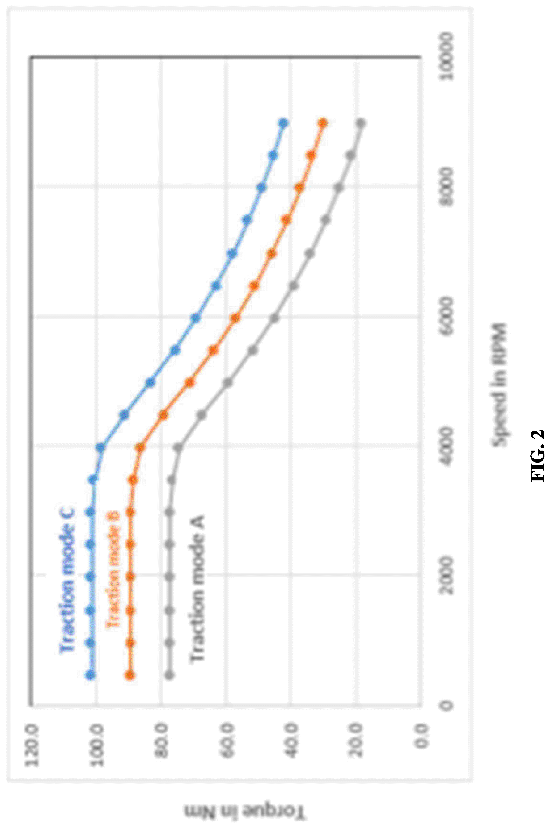

The control unit 101 can change the traction modes that the vehicle is operating in, based on power automatically considering hysteresis, driveability, and comfort of the user of the vehicle. Due to sudden change in the power values (P), the current traction mode may also vary/change to a different mode suddenly based on the current value of the power (P). Hysteresis is where the transition between modes (like switching between two operational modes) does not occur immediately or symmetrically with respect to input conditions. FIG. 2 is an example graph depicting example traction modes, wherein the modes depict a plot of the torque (Nm) versus the speed of the traction motor 103 (RPM).

The control unit 101 can monitor the power output of the traction motor(s) 103 (in terms of KiloWatts (kW)) over a calibrated period of time (typically in terms of seconds) with an accuracy of 0.001 level. In an example herein, the control unit 101 can monitor the power output of the traction motor(s) 103 over three seconds. In an example herein, the control unit 101 can monitor the power output of the traction motor(s) 103 over five seconds. In an example herein, the control unit 101 can monitor the power output of the traction motor(s) 103 over eight seconds. In an example herein, the control unit 101 can monitor the power output of the traction motor(s) 103 over ten seconds. The control unit 101 can average the monitored power levels over the calibrated time period (wherein the average power levels over the calibrated time period is hereinafter referred to as P).

The control unit 101 can check if P is less than a first pre-determined power level (L1). If P is less than or equal to L1, the control unit 101 can determine to operate the vehicle in a first traction mode (mode A). For example, if P is less than or equal to 15kW (i.e., 20 hp), the control unit 101 determines to operate the vehicle in mode A, wherein the maximum power provided by the traction motor(s) 103 is 15kW (i.e., 20 hp). The control unit 101 can provide an indication to the user using the UI 102, that the vehicle is operating in traction mode A.

If P is not less than L1, the control unit 101 can check if P is greater than L1, and less than a second determined power level (L2). If P is greater than L1, and less than or equal to L2, the control unit 101 can determine to operate the vehicle in a second traction mode (mode B). For example, if P is greater than 15kW (i.e., 20 hp), and less than or equal to 20kW (i.e., 30hp), the control unit 101 determines to operate the vehicle in mode B, wherein the maximum power provided by the traction motor(s) 103 is 22kW (i.e., 30 hp). The control unit 101 can provide an indication to the user using the UI 102, that the vehicle is operating in traction mode B.

If P is not less than L2, the control unit 101 can check if P is greater than L2, and less than a third determined power level (L3). If P is greater than L2, and less than or equal to L3, the control unit 101 can determine to operate the vehicle in a third traction mode (mode C). For example, if P is greater than 22kW (i.e., 30 hp), and less than or equal to 29.8kW (i.e., 35hp), the control unit 101 determines to operate the vehicle in mode C, wherein the maximum power provided by the traction motor(s) 103 is 29.8kW (i.e., 35hp). The control unit 101 can provide an indication to the user using the UI 102, that the vehicle is operating in traction mode C.

In an embodiment herein, the control unit 101 can monitor the transition zones of L1 to L2, and L2 to L3 on a moving average. On determining that there are one or more transition values happening periodically, the control unit 101 will stay on the current power mode until the continuous value is greater than the threshold value.

Embodiments herein use the modes A, B, and C as examples of the modes that can be used. It may be obvious to a person of ordinary skill in the art that there may be additional modes, that the vehicle is currently operating in.

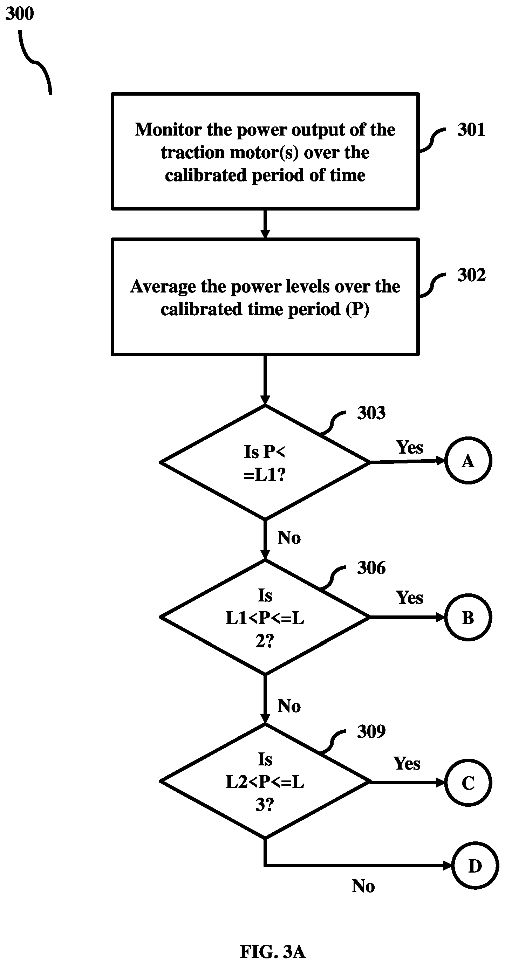

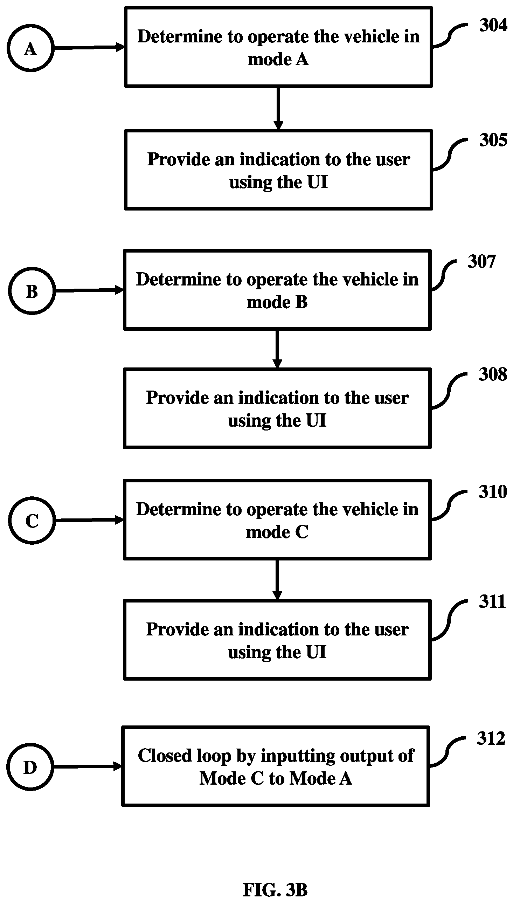

FIGs. 3A and 3B are flowcharts depicting the process of controlling the traction of a tractor. In step 301, the control unit 101 monitors the power output of the traction motor(s) 103 over the calibrated period of time (typically in terms of seconds). In step 302, the control unit 101 averages the power output levels over the calibrated time period (P). In step 303, the control unit 101 checks if P is less than or equal to L1. If P is less than or equal to L1, in step 304, the control unit 101 determines to operate the vehicle in the mode A. In step 305, the control unit 101 provides an indication to the user using the UI 102, that the vehicle is operating in traction mode A. If P is not less than L1, in step 306, the control unit 101 checks if P is greater than L1, and less than or equal to L2. If P is greater than L1, and less than or equal to L2, in step 307, the control unit 101 determines to operate the vehicle in the mode B. In step 308, the control unit 101 provides an indication to the user using the UI 102, that the vehicle is operating in traction mode B. If P is not greater than L1, and not less than or equal to L2, in step 309, the control unit 101 checks if P is greater than L2, and less than or equal to L3. If P is greater than L2, and less than or equal to L3, in step 310, the control unit 101 determines to operate the vehicle in the mode C. In step 311, the control unit 101 provides an indication to the user using the UI 102, that the vehicle is operating in traction mode C. If P is greater than L2, and is not less than or equal to L3, in step 312, the control unit 101 operates in a closed loop by inputting output of Mode C to Mode A. The various actions in method 300 may be performed in the order presented, in a different order or simultaneously. Further, in some embodiments, some actions listed in FIGs. 3A and 3B may be omitted.

The embodiments disclosed herein can be implemented through at least one software program running on at least one hardware device and performing network management functions to control the network elements. The elements include blocks which can be at least one of a hardware device, or a combination of hardware device and software module.

The embodiments disclosed herein describe methods and systems for automatically controlling the traction of a tractor, wherein the tractor can control the traction based on hysteresis and a moving average of power being used by the tractor over a pre-defined period of time. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The method is implemented in at least one embodiment through or together with a software program written in e.g., Very high speed integrated circuit Hardware Description Language (VHDL) another programming language, or implemented by one or more VHDL or several software modules being executed on at least one hardware device. The hardware device can be any kind of portable device that can be programmed. The device may also include means which could be e.g., hardware means like e.g., an ASIC, or a combination of hardware and software means, e.g., an ASIC and an FPGA, or at least one microprocessor and at least one memory with software modules located therein. The method embodiments described herein could be implemented partly in hardware and partly in software. Alternatively, the invention may be implemented on different hardware devices, e.g., using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of embodiments and examples, those skilled in the art will recognize that the embodiments and examples disclosed herein can be practiced with modification within the scope of the embodiments as described herein.

## Claims

1. A method (300) for controlling traction in a tractor, the method comprising:
monitoring (301), by a control unit (101), power output of at least one traction motor (103) over a calibrated period of time;
averaging (302), by the control unit (101), the monitored power output;
operating (304), by the control unit (101), the tractor in a first traction mode, if the average power output is less than, or equal to a first pre-determined power level;
operating (307), by the control unit (101), the tractor in a second traction mode, if the average power output is greater than the first pre-determined power level, and lower than, or equal to a second pre-determined power level; and
operating (310), by the control unit (101), the tractor in a third traction mode, if the average power output is greater than the second pre-determined power level, and lower than, or equal to a third pre-determined power level.

2. The method, as claimed in claim 1, wherein the tractor is one of an electric tractor, and a hybrid tractor.

3. The method, as claimed in claim 1, wherein the method comprises providing (305, 308, 311), by the control unit (101), an indication to a user of the tractor using a User Interface (UI) (102) of the mode that the tractor is currently operating in.

4. A control unit (101) in a tractor, the control unit (101 configured to:
monitor power output of at least one traction motor (103) over a calibrated period of time;
average the monitored power output;
operate the tractor in a first traction mode, if the average power output is less than, or equal to a first pre-determined power level;
operate the tractor in a second traction mode, if the average power output is greater than the first pre-determined power level, and lower than, or equal to a second pre-determined power level; and
operate the tractor in a third traction mode, if the average power output is greater than the second pre-determined power level, and lower than, or equal to a third pre-determined power level.

5. The control unit, as claimed in claim 4, wherein the tractor is one of an electric tractor, and a hybrid tractor.

6. The control unit, as claimed in claim 4, wherein the control unit (101) is configured to provide an indication to a user of the tractor using a User Interface (UI) (102) of the mode that the tractor is currently operating in.
